## Europäisches Patentamt
## European Patent Office
## Office européen des brevets

(11) Veröffentlichungsnummer: **0 087 107**
**B1**

(12) # EUROPÄISCHE PATENTSCHRIFT

(45) Veröffentlichungstag der Patentschrift:
11.06.86

(51) Int. Cl.⁴: **H 04 B 7/005**, H 03 H 7/01

(21) Anmeldenummer: 83101440.2

(22) Anmeldetag: 15.02.83

(54) Einstellbare Entzerrerschaltung.

(30) Priorität: 18.02.82 DE 3205875

(43) Veröffentlichungstag der Anmeldung:
31.08.83 Patentblatt 83/35

(45) Bekanntmachung des Hinweises auf die Patenterteilung:
11.06.86 Patentblatt 86/24

(84) Benannte Vertragsstaaten:
AT DE NL SE

(56) Entgegenhaltungen:
DE - B - 1 791 202
DE - B - 2 042 784
DE - B - 2 443 533
GB - A - 1 433 212
GB - A - 2 016 249
US - A - 3 812 436

(73) Patentinhaber: Siemens Aktiengesellschaft, Berlin und München Wittelsbacherplatz 2, D-8000 München 2 (DE)

(72) Erfinder: Ulmer, Wolfgang, Dipl.-Ing., Grünstrasse 9, D-8000 München 70 (DE)

LIBER, STOCKHOLM 1986

## Beschreibung

Die Erfindung bezieht sich auf eine einstellbare Entzerrerschaltung für einen Richtfunkempfänger mit mindestens zwei, vorzugsweise in Basisschaltung betriebenen Transistoren, die über ein Kopplungsnetzwerk miteinander verbunden sind, das aus einem zweikreisigen Bandfilter besteht, dessen als Parallelresonanzkreis ausgebildeter Primärkreis am Ausgang des vorgeschalteten Transistors liegt und dessen als Serienresonanzkreis ausgebildeter und mit dem nachgeschalteten Transistor verbundener Sekundärkreis an den Primärkreis induktiv angekoppelt ist und in dessen Sekundärkreis ein ohmscher Widerstand in Reihe geschaltet is. Eine derartige Entzerrerschaltung ist durch die DE-B2-17 91 202 bekannt. Durch GB-A-1 433 212 ist es bei einem "base-band delay egualizer" bekannt, als Kondensator des Serienresonanzkreises des Bandfilters eine Kapazitätsdiode zu verwenden, der eine vom Empfänger abgeleitete Regelspannung zugeführt wird und der ein Kondensator parallelgeschaltet ist.

Ferner ist es durch die US-A-3 812 436 bekannt, bei einer einstellbaren Entzerrerschaltung mehrere gleichartige Kopplungsnetzwerke über Transistoren in Basisschaltung entkoppelt in Reihe zu schalten und die Kondensatoren dieser Netzwerke über eine gemeinsame Regelspannung zu steuern. Die Kondensatoren sind teilweise auch Kapazitätsdioden, denen ein Kondensator parallelgeschaltet ist.

Bei Richtfunksystemen sind die Eigenschaften des Funkfeldes gewissen Schwankungen unterworfen. Es kommt dadurch zu Änderungen der Dämpfungs- und Gruppenlaufzeitverzerrungen. Besonders Schräglagen der Dämpfungsverzerrungen führen zu unzulässig hohen Bitfehlerquoten.

Durch Einfügen eines automatischen Dämpfungsentzerrers in den Signalweg des Empfängers können die durch die Änderungen des Funkfeldes verursachten Dämpfungsverzerrungen im wesentlichen ausgeglichen werden. Eine solche Schaltung, wie sie beispielsweise durch den Aufsatz "Adaptive Egualization für Digital Microwave Radio Systems" von P.R. Hartmann und B. Bynum, erschienen in ICC 80 Record, Vol. 1, Seiten 851 bis 856 bekannt ist, erfordert einen erheblichen zusätzlichen Aufwand.

Der Erfindung liegt die Aufgabe zugrunde, eine einstellbare Entzerrerschaltung zu schaffen, mit der die Dämpfungsverzerrungen in einfacher Weise ausgeglichen werden können und dabei ein symmetrischer Verlauf des Ausgangsspektrums erreicht wird.

Diese Aufgabe wird gemäß der Erfindung mit einer einstellbaren Entzerrerschaltung der eingangs beschriebenen Art so gelöst, daß die Bildung der Regelspannung in der Weise erfolgt, daß das ausgekoppelte Ausgangsspektrum parallel auf zwei Bandpässe gleicher Bandbreite gegeben wird, deren Mittenfrequenz zu entgegengesetzten Seiten der Signalmittenfreguenz verschoben ist, daß den Bandpässen jeweils ein Gleichrichter nachgeschaltet ist, deren Ausgänge an die Eingänge eines Subtrahiergliedes angeschlossen sind, das über einen Verstärker mit den Kapazitätsdioden der Bandfilter des Dämpfungsentzerrers verbunden ist, und daß die Bandbreite und die Mittenfrequenz der Bandpässe so gewählt sind, daß jeder Bandpaß etwa die entgegengesetzte Hälfte des Spektrums durchläßt.

In vorteilhafter Weiterbildung des Erfindungsgegenstandes ist vorgesehen, daß das Ausgangsspektrum zur Ableitung der Regelspannung dem Ausgang eines dem Dämpfungsentzerrer nachgeschalteten mehrstufigen geregelten Verstärkers entnommen wird.

Nachstehend wird die Erfindung anhand von in der Zeichnung dargestellten Ausführungsbeispielen näher erläutert. Es zeigen

Figur 1 eine Entzerrerschaltung und

Figur 2 einen Richtfunkempfänger mit adaptivem Dämpfungsentzerrer im Blockschaltbild.

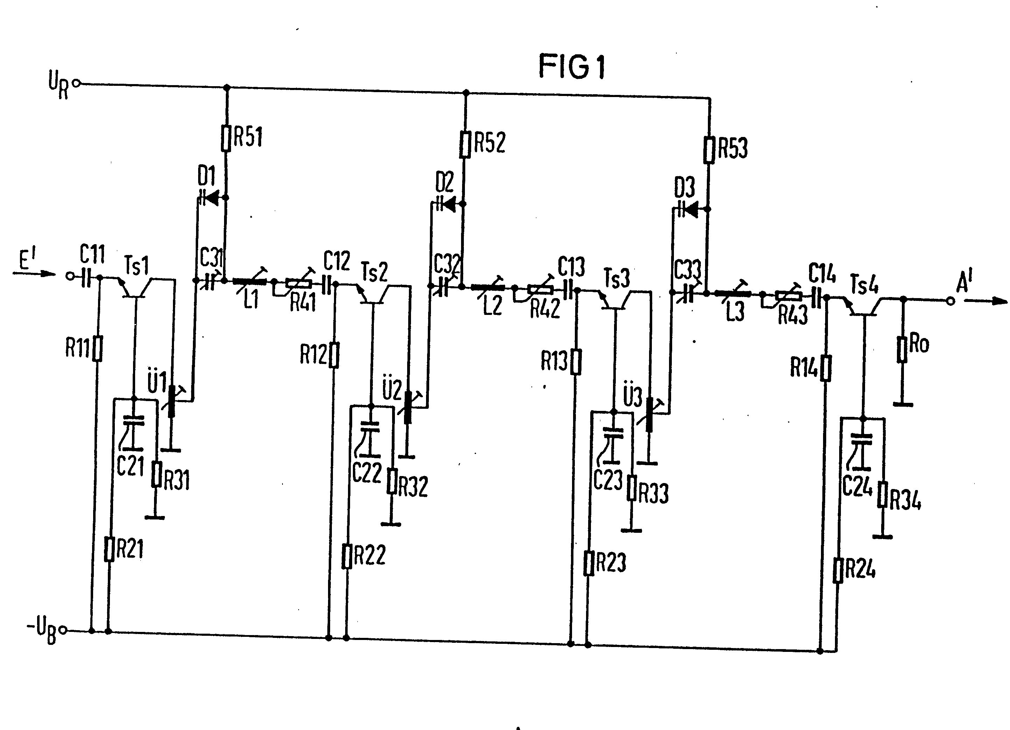

Figur 1 zeigt die Entzerrerschaltung, wobei es sich um den ZF-Vorverstärker des Richtfunkempfängers handelt, dessen zwischen den einzelnen Transistorstufen eingefügte Kopplungsnetzwerke für eine automatische Dämpfungsentzerrung benutzt werden. Die in Basisschaltung betriebenen Transistoren sind mit Ts1, Ts2, Ts3 und Ts4 bezeichnet. Die einzelnen Kopplungsnetzwerke,zweikreisige Bandfilter mit einem als Parallelresonanzkreis ausgebildeten Primärkreis und einem als Serienresonanzkreis ausgebildeten Sekundärkreis bestehen jeweils aus einem an den Kollektor der Transistoren angeschlossenen Übertrager Ü1, Ü2, Ü3 mit einer Anzapfung, sowie jeweils einem an diese Anzapfung angeschlossenen Trimmerkondensator C31, C32, C33, dem jeweils eine einstellbare Induktivität L1, L2, L3 und ein einstellbarer ohmscher Widerstand R41, R42, R43 in Reihe geschaltet sind. Die Schaltelemente R11...R14, R21...R24, R31...R34 und C21...C24 dienen in üblicher Weise zur Verblockung der Speisespannung bzw. zur Zuführung und Siebung des Speisestromes. -U$_B$ ist die Versorgungsspannung. Ferner sind Koppelkondensatoren C11...C14 vorgesehen.

Durch Variation eines Kondensators der Kopplungsnetzwerke ist es möglich, die Schräglage der Amplitudenkurve nach beiden Richtungen zu ändern. Die Änderung der Gruppenlaufzeitverzerrung ist hierbei relativ klein.

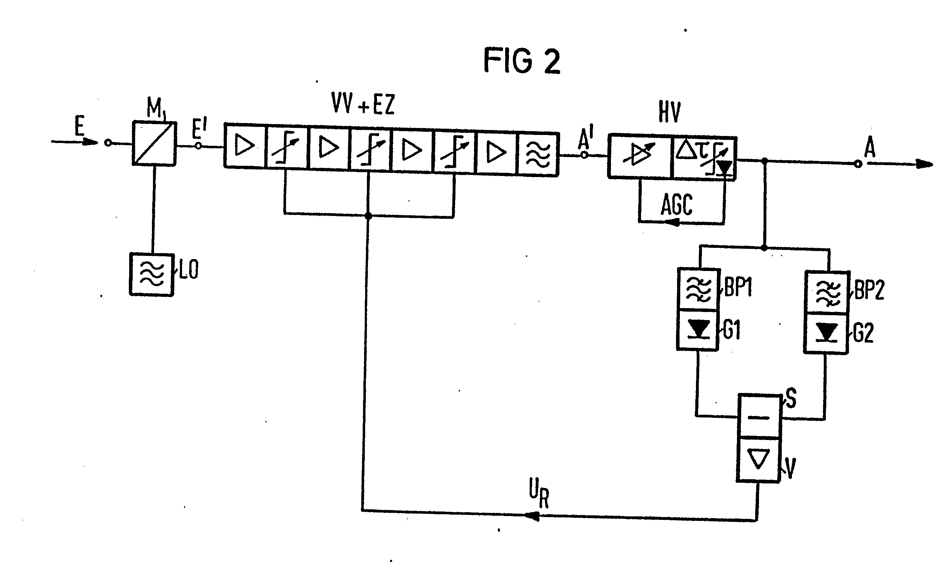

Erfindungsgemäß sind den Trimmerkondensatoren C31, C32, C33 des Serienkreises der Bandfilter Kapazitätsdioden D1, D2, D3 parallelgeschaltet. Diesen wird über ohmsche. Widerstände R51, R52, R53 eine Regelspannung U$_R$ zugeführt. Durch Veränderung der Sperrspannung der Kapazitätsdioden D1, D2, D3 werden die Kapazitäten der Serienkreise geändert, godurch die Amplitudenschräglage wesentlich verändert werden kann. Eine entsprechende Vergrößerung des Effektes wird durch Kettenschaltung von mehreren Bandfilterstufen erreicht. Diese Kettenschaltung ist auch nötig, um eine ausreichende Verstärkung zu erzielen, so daß gegenüber einer ZF-Vorverstärkerschaltung ohne adaptiven Amplitudenentzerrer nur ein geringfügiger Mehraufwand erforderlich ist. Der Amplitudenentzerrer wird durch die Regelspannung $U_R$ gesteuert, die vom Ausgang A des Empfängers abgeleitet gird (vgl. Fig. 2).

Figur 2 zeigt einen Richtfunkempfänger im Blockschaltbild, bestehend aus dem Vorverstärker mit Entzerrer (VV + EZ) zwischen dem Eingang E' und dem Ausgang A' gemäß Fig. und einem mehrstufigen geregelten Verstärker als Hauptverstärker HV, von dessen Ausgang A die Regelspannung $U_R$ abgeleitet und dem Entzerrer des Vorverstärkers zugeführt wird. Eingangsseitig enthält der Richtfunkempfänger einen Mischer M, dem das Eingangssignal und das Signal eines Lokaloszillators LO zugeführt werden.

Zur Ableitung der Regelspannung $U_R$ wird das dem Ausgang des Hauptverstärkers HV entnommene Ausgangsspektrum parallel auf zwei Bandpässe BP1 und BP2 gleicher Bandbreite gegeben, deren Mittenfrequenz zu entgegengesetzten Seiten der Signalmittenfrequenz verschoben ist. Die Bandbreite der Bandpässe ist so gewählt, daß jeder Bandpaß etwa die entgegengesetzte Hälfte des Spektrums durchläßt. Nach Durchlaufen der Bandpässe BP1 und BP2 werden die Spektralanteile in den Gleichrichtern G1 bzw. G2 gleichgerichtet, im Subtrahierer S voneinander subtrahiert und im nachfolgenden Verstärker V verstärkt.

Es wird also geprüft, ob das abgehende Signalspektrum des Richtfunkempfängers symmetrisch ist. Liegt eine Unsymmetrie des Ausgangsspektrums vor, so entsteht eine Regelspannung, die den Amplitudementzerrer so steuert, daß diese Unsymmetrie weitgehend aufgehoben wird.

**Patentansprüche**

1. Einstellbare Entzerrerschaltung für einen Richtfunkempfänger mit wenigstens zwei, vorzugsweise in Basisschaltung betriebenen Transistoren (Ts1...Ts4), die über ein Kopplungsnetzwerk miteinander verbunden sind, das aus einem zweikreisigen Bandfilter besteht, dessen als Parallelresonanzkreis ausgebildeter Primärkreis am Ausgang des vorgeschalteten Transistors liegt und dessen als Serienresonanzkreis ausgebildeter und mit dem nachgeschalteten Transistor verbundener Sekundärkreis an den Primärkreis induktiv angekoppelt ist und in dessen Sekundärkreis ein ohmscher Widerstand (R41...R43) in Reihe geschaltet ist, unter Verwendung einer Kapazitätsdiode (D1...D3) als Kondensator des Serienresonanzkreises des Ban filters, der eine vom Empfänger abgeleitete Regelspannung ($U_R$) zugeführt wird und der ein Kondensator (C31...C33) parallelgeschaltet ist,
dadurch gekennzeichnet,
daß die Bildung der Regelspannung in der Weise erfolgt, daß das ausgekoppelte Ausgangsspektrum parallel auf zwei Bandpässe (BP1, BP2) gleicher Bandbreite gegeben wird, deren Mittenfreguenz zu entgegengesetzten Seiten der Signalmittenfrequenz verschoben ist, daß den Bandpässen (BP1, BP2) jeweils ein Gleichrichter (G1, G2) nachgeschaltet ist, deren Ausgänge an die Eingänge eines Subtrahiergliedes (S) angeschlossen sind, das über einen Verstärker (V) mit den Kapazitätsdioden (D1...D3) der Bandfilter des Dämpfungsentzerrers (EZ) verbunden ist, und daß die Bandbreite und die Mittenfrequenz der Bandpässe so gewählt sind, daß jeder Bandpaß etwa die entgegengesetzte Hälfte des Spektrums durchläßt.

2. Einstellbare Entzerrerschaltung nach Anspruch 1,
dadurch gekennzeichnet,
daß das Ausgangsspektrum zur Ableitung der Regelspannung dem Ausgang eines dem Dämpfungsentzerrer (EZ) nachgeschalteten mehrstufigen geregelten Verstärkers (HV) entnommen wird.

**Claims**

1. An adjustable equaliser circuit for a radio relay receiver with at least two transistors (Ts1...Ts4), preferably operated as a common base stage and connected to one another via a coupling network which consists of a two-circuit band filter whose primary circuit is a parallel resonant circuit connected to the output of the preceding transistor and whose secondary circuit is a series-resonant circuit connected to the following transistor inductively coupled to the primary circuit. in whose secondary circuit a resistor (R41...R43) is connected in series, using a capacitance diode (D1...D3) as the capacitor of the series-resonant circuit of the band filter, supplied with a regulating voltage ($U_R$) derived from the receiver and to which a capacitor (C31...C33) is connected in parallel, characterised in that the regulating voltage is formed in that the output-coupled spectrum is fed in parallel to two band-pass filters (BP1, BP2) of equal band-width, whose middle frequencies are displaced to opposite sides of the middle signal frequency, that the band-pass filters (BP1, BP2) are each connected at their output end to a rectifier (G1, G2) whose outputs are connected to the inputs of a subtractor (S) connected via an amplifier (V) to the capacitance diodes (D1...D3) of the band filters of the attenuating equaliser (EZ) and that the band width and the middle frequency of the band-pass filters are selected such that each band-pass filter transmits approximately the opposite half of the spectrum.

2. An adjustable equaliser circuit as claimed in Claim 1, <u>characterised in that</u> for the formation of the regulating voltage the output spectrum is obtained from the output of a multi-stage, regulated amplifier (HV) connected to the output of the attenuating equaliser (EZ).

## Revendications

1. Circuit correcteur réglable de distorsions pour un récepteur hertzien, comportant au moins deux transistors (Ts1...Ts4) fonctionnant de préférence selon un montage en base commune et qui sont reliés entre eux par l'intermédiaire d'un réseau de couplage qui est constitué par deux filtres passe-bande formés de deux circuits et dont le circuit primaire, qui est réalisé sous la forme d'un circuit résonnant parallèle, est raccordé à la sortie du transistor branché en amont et dont le circuit secondaire, qui est réalisé sous la forme d'un circuit résonnant série et qui est relié au transistor branché en aval, est accouplé inductivement au circuit primaire, et dans le circuit secondaire duquel une résistance ohmigue (R41...R43) est branchée en série, et dans lequel on utilise comme condensateur du circuit résonnant série du filtre passe-bande, une diode capacitive (D1...D3) à laquelle est envoyée une tension de réglage (U$_R$) dérivée du récepteur et en parallèle avec laquelle se trouve branché un condensateur (C31... C33), caractérisé par le fait que la formation de la tension de réglage est réalisée de telle sorte gue le spectre de sortie extrait par découplage est envoyé en parallèle à deux filtres passe -bande (BP1, BP2) possédant des largeurs de bande indentiques, dont la fréquence centrale est décalée vers des côtés opposgs de la fréquence centrale du signal, qu'en aval des filtres passe-bande (BP1, BP2) se trouvent raccordés des redresseurs respectifs (G1, G2), dont les sorties sont raccordées aux entrges d'un circuit soustracteur (S) qui est relié, par l'intermédiaire d'un amplificateur (V), aux diodes capacitives (D1...D3) des filtres passe-bande du correcteur d'affaiblissement (EZ), et que la largeur de bande et la fréquence centrale des filtres passe-bande sont choisies en sorte que chaque filtre passe-bande transmet approximativement la moitié opposée du spectre.

2. Circuit correcteur de distorsions suivant la revendication 1, caractérisé par le fait que le spectre de sortie servant à dériver la tension de réglage est prélevé sur la sortie d'un amplificateur réglé (HV) comportant plusieurs étages et branché en aval du correcteur d'affaiblissement (EZ).

FIG 1

# FIG 2